# EUROPEAN PATENT APPLICATION

(11) **EP 2 903 331 A1**
(43) Date of publication of application: **05.08.2015**
(21) Application number: 14305126.6
(22) Date of filing: 30.01.2014
(51) Int. Cl.: H04W 28/08, H04W 36/14, H04W 88/10

(54) **Load balancing**

(71) Applicant: ALCATEL LUCENT, 92100 Boulogne-Billancourt (FR)
(72) Inventor: Lim, Seau Sian, Swindon, Wiltshire SN5 7DJ (GB); Puddle, Nicola, Swindon, Wiltshire SN5 7DJ (GB); Palat, Sudeep, Swindon, Wiltshire SN5 7DJ (GB)
(74) Representative: Leppard, Andrew John

(57) **Abstract**

A wireless telecommunications base station, a wireless telecommunications base station method, wireless telecommunications user equipment, wireless telecommunications user equipment method and a computer program product are disclosed. The wireless telecommunications base station of a first radio access network operable to support a plurality of public land mobile networks comprises: reception logic operable to receive condition information indicative of operating conditions being experienced by at least one of user equipment connected to said base station, logic of said base station of said first radio access network and a network node of a second radio access network operable to support at least one public land mobile network; determining logic operable to determine load balancing parameters for each public land mobile network supported by that base station for transmission to user equipment to control user equipment connection to one of said first radio access network and a second radio access network, said load balancing parameters being determined based on said condition information; and transmission logic operable to transmit a message including said load balancing parameters for each public land mobile network to user equipment within a cell provided by said base station. In this way, rather than only a single set of load-balancing parameters being transmitted, individual sets of load-balancing parameters maybe transmitted which are optimized for each network operator sharing the base station to provide a public land mobile network. This enables each network operator to set different load-balancing or traffic steering parameters, depending on their requirements and their agreements with the first and second radio access networks.

## Description

### FIELD OF THE INVENTION

The present invention relates to a wireless telecommunications base station, a wireless telecommunications base station method, wireless telecommunications user equipment, wireless telecommunications user equipment method and a computer program product.

### BACKGROUND

Wireless telecommunications networks are known. In such networks, mobile user equipment (for example, mobile telephones) are operable to communicate with base stations provided by network providers. In such wireless telecommunications networks, radio coverage is provided to user equipment, such as mobile telephones or wireless devices such as tablets within areas known as cells. Abase station is located in each cell to provide radio coverage. Typically, user equipment in each cell are operable to receive information and data from a base station and to transmit information data to a base station.

User equipment roam through a wireless telecommunications network. Base stations are typically provided with support areas of radio coverage. A number of such base stations are provided and are distributed geographically in order to provide a wide area of coverage to user equipment.

When user equipment is within an area served by a base station, communications may be established between the user equipment and the base station over associated radio links which provide the radio access network (RAN). Each base station typically supports a number of sectors within the geographical area of service. Typically, a different antenna within a base station supports each associated sector. Each base station typically has multiple antennas.

Cellular (3GPP) wireless telecommunications networks often co-exist in geographical regions with 802.11 or similar Wi-Fi or similar wireless local area networks (WLAN). Smartphones, tablets and other user equipment are often configured to establish links with a core cellular network and with one or more WLAN.

The coexistence of these networks can result in unexpected consequences. It is desired to address one or more of those consequences.

### SUMMARY

According to a first aspect, there is provided a wireless telecommunications base station of a first radio access network operable to support a plurality of public land mobile networks, the base station comprising: reception logic operable to receive condition information indicative of operating conditions being experienced by at least one of user equipment connected to the base station, logic of the base station of the first radio access network and a network node of a second radio access network operable to support at least one public land mobile network; determining logic operable to determine load balancing parameters for each public land mobile network supported by that base station for transmission to user equipment to control user equipment connection to one of the first radio access network and a second radio access network, the load balancing parameters being determined based on the condition information; and transmission logic operable to transmit a message including the load balancing parameters for each public land mobile network to user equipment within a cell provided by the base station.

The first aspect recognizes that various techniques are proposed for performing load balancing or traffic steering between a first radio access network (such as a 3GPP network) and a second radio access network (such as a Wi-Fi WLAN) take into consideration the 3GPP radio-related parameters such as the 3GPP load and signal strength. Such load-balancing aims to facilitate complete offloading (i.e. all Internet protocol (IP) traffic of a user equipment is offloaded) or partial offloading (i.e. only partial IP traffic of user equipment is offloaded) from the 3GPP RAN to the WLAN, and vice versa. These proposals are based on access network discovery and selection function (ANDSF) enhanced with RAN parameters to perform WLAN selection and traffic steering, or are based on RAN rules related to the RAN parameters to perform WLAN selection and traffic steering, or are based on an RAN command based on user equipment report triggering by some events related to the RAN parameters to perform WLAN selection and traffic steering. In the first two approaches, the RAN parameters are used by the user equipment to decide whether to choose a WLAN and whether to perform traffic steering to/from the WLAN. In the third proposal, the RAN parameters are used by the user equipment to decide whether to report to the network for WLAN selection and traffic steering. For the second and third proposals, the list of possible WLAN identifiers (for example, SSID, BSSID, realm, domain ID, etc.) may also be provided as part of the RAN parameters and may be ordered according to an operator's preference (for example, the first entry in the list may be the most preferred WLAN, whilst the last entry in the list may be the least preferred). However, the first aspect also recognizes that in a shared RAN environment, where more than one operator uses the same RAN node (for example, a base station), each operator may have its own set of RAN parameters which it wishes to use in order to meet its load-balancing needs. For example, using Reference Signal Received Power (RSRP)/ Common Pilot Channel (CPICH) received signal code power (RSCP) thresholds for traffic steering, one operator may only wish to move the cell edge users to WLAN when the 3GPP network is not congested. However, another operator may wish all user equipment within a cell to move to WLAN, even when the 3GPP network is not congested, as long as the WLAN is also not congested. In these circumstances, the thresholds used for the two operators will be different. The first aspect also recognizes that the list of WLAN identifiers onto which traffic may be steered may be different, as different operators may have different sets of WALAN as they will have roaming agreements and partnerships with different WLAN operators. Even if different operators use the same set of WLAN, the order of these WLAN may not be the same, as each WLAN may have a different priority for each operator depending on the agreement and partnership.

Accordingly, a wireless telecommunications base station may be provided. The wireless telecommunications base station may be for a first radio access network. The first radio access network may support more than one public land mobile network. That is to say, the first radio access network may support different network operators. In particular, the base station may be shared by different network operators each providing their own public land mobile network. The base station may comprise reception logic which receives condition information. The condition information may indicate the operating conditions currently being experienced by user equipment connected to the base station. The condition information may also indicate the conditions currently being experienced by the logic of the base station itself. The condition information may also indicate the operating conditions currently being experienced by a network node of a second radio access network. The network node of the second radio access network may support one or more public land mobile networks. That is to say, the network node may be utilized by one or more network operators to support their public land mobile networks. The base station may also comprise determining logic which determines load balancing or traffic steering parameters for each public land mobile network supported by the base station. That is to say, load-balancing parameters may be determined for each network operator sharing the base station to provide its public land mobile network. The load-balancing parameters may control user equipment connection between the first radio access network and the second radio access network. The load-balancing parameters may be determined using the condition information. The base station may also comprise transmission logic which transmits a message to user equipment within a cell provided by the base station. The message may include the load-balancing parameters for each of the public land mobile networks. That is to say, the message may include load-balancing parameters for every network operator sharing the base station. In this way, rather than only a single set of load-balancing parameters being transmitted, individual sets of load-balancing parameters may be transmitted which are optimized for each network operator sharing the base station to provide a public land mobile network. This enables each network operator to set different load-balancing or traffic steering parameters, depending on their requirements and their agreements with the first and second radio access networks.

In one embodiment, the first radio access network comprises a wireless telecommunications network and the second radio access network comprises a wireless local area network. Hence, the first radio access network may be a wireless telecommunications network such as a 3GPP network and the second radio access network may be a wireless local area network, such as a Wi-Fi network.

In one embodiment, each public land mobile network is provided for a different network operator.

In one embodiment, the reception logic is operable to receive updated condition information indicative of current operating conditions and the determining logic operable to determine updated load balancing parameters for each public land mobile network based on the updated condition information. Accordingly, should the operating conditions being experienced change, then the load-balancing parameters may be updated to change how user equipment is steered between the different radio access networks.

In one embodiment, the condition information comprises at least one of an indication of a radio condition, signal strength, interference strength, a cell condition and loading.

In one embodiment, the reception logic is operable to receive the condition information from at least one of user equipment connected to the base station, the logic of the base station of the first radio access network and the network node of the second radio access network. Accordingly, the condition information may come from one or more of the user equipment, base station and the network node.

In one embodiment, the load balancing parameters comprise traffic steering parameters indicating to the user equipment conditions under which to connect to one of the first radio access network and a second radio access network. Accordingly, the load-balancing parameters may indicate the operating conditions under which the user equipment should offload from the first radio access network to the second radio access network, or vice versa.

In one embodiment, the traffic steering parameters comprise at least one of an indication of a radio condition threshold, signal strength threshold, interference strength threshold, a cell condition threshold and loading threshold at which to connect to one of the first radio access network and a second radio access network. Accordingly, the parameters may be set as thresholds, either alone or in combination, at which the user equipment should select between the first and the second radio access networks.

In one embodiment, the load balancing parameters comprise network identification parameters identifying at least one network node of the second radio access network to which the user equipment is connectable. Hence, the parameters may indicate the network nodes to which the user equipment may connect. This helps the user equipment to identify those network nodes.

In one embodiment, the network identification parameters identify a connection preference for each network node of the second radio access network. Accordingly, a priority may be specified for each of the network nodes.

In one embodiment, the message comprises load balancing parameters for each network node of the second radio access network. Accordingly, the thresholds may be specified for each network node which allows the operator to select different parameters for different network nodes.

In one embodiment, the message comprises common load balancing parameters for every public land mobile network together with replacement load balancing parameters for each public land mobile network. Accordingly, the message may comprise a common set of load-balancing parameters together with replacement parameters for those public land mobile networks which have the need for different parameters to the common parameters. This can help to reduce the size of the message.

In one embodiment, the transmission logic is operable to transmit the message as one of a broadcast message to all user equipment supported by the base station and a unicast message to a specified user equipment supported by the base station. Accordingly, the message may be transmitted as a broadcast message or transmitted individually to selected user equipment.

According to a second aspect, there is provided a wireless telecommunications base station method, the base station being of a first radio access network and operable to support a plurality of public land mobile networks, the method comprising: receiving condition information indicative of operating conditions being experienced by at least one of user equipment connected to the base station, logic of the base station of the first radio access network and a network node of a second radio access network operable to support at least one public land mobile network; determining load balancing parameters for each public land mobile network supported by that base station for transmission to user equipment to control user equipment connection to one of the first radio access network and a second radio access network, the load balancing parameters being determined based on the condition information; and transmitting a message including the load balancing parameters for each public land mobile network to user equipment within a cell provided by the base station.

In one embodiment, the first radio access network comprises a wireless telecommunications network and the second radio access network comprises a wireless local area network.

In one embodiment, each public land mobile network is provided for a different network operator.

In one embodiment, the method comprises receiving updated condition information indicative of current operating conditions and determining updated load balancing parameters for each public land mobile network based on the updated condition information.

In one embodiment, the condition information comprises at least one of an indication of a radio condition, signal strength, interference strength, a cell condition and loading. In one embodiment, the step of receiving comprises receiving the condition information from at least one of user equipment connected to the base station, logic of the base station of the first radio access network and the network node of the second radio access network.

In one embodiment, the load balancing parameters comprise traffic steering parameters indicating to the user equipment conditions under which to connect to one of the first radio access network and a second radio access network.

In one embodiment, the traffic steering parameters comprise at least one of an indication of a radio condition threshold, signal strength threshold, interference strength threshold, a cell condition threshold and loading threshold at which to connect to one of the first radio access network and a second radio access network.

In one embodiment, the load balancing parameters comprise network identification parameters identifying at least one network node of the second radio access network to which the user equipment is connectable.

In one embodiment, the network identification parameters identify a connection preference for each network node of the second radio access network.

In one embodiment, the message comprises load balancing parameters for each network node of the second radio access network.

In one embodiment, the message comprises common load balancing parameters for every public land mobile network together with replacement load balancing parameters for each public land mobile network.

In one embodiment, the message comprises one of a broadcast message to all user equipment supported by the base station and a unicast message to a specified user equipment supported by the base station.

According to a third aspect, there is provided wireless telecommunications user equipment comprising: reception logic operable to receive a message including load balancing parameters for each public land mobile network supported by a base station of a first radio access network and a network node of a second radio access network; and control logic operable to control connection to one of the first radio access network and the second radio access network based on the load balancing parameters for that public land mobile network with which the user equipment is associated and condition information indicative of operating conditions being experienced by at least one of the user equipment, logic of the base station and the network node.

In one embodiment, the first radio access network comprises a wireless telecommunications network and the second radio access network comprises a wireless local area network.

In one embodiment, each public land mobile network is provided for a different network operator.

In one embodiment, the reception logic is operable to receive updated load balancing parameters for each public land mobile network and the control logic is operable control connection to one of the first radio access network and the second radio access network based on the updated load balancing parameters.

In one embodiment, the condition information comprises at least one of an indication of a radio condition, signal strength, interference strength, a cell condition and loading.

In one embodiment, the user equipment comprises transmission logic operable to transmit the condition information to the base station.

In one embodiment, the load balancing parameters comprise traffic steering parameters indicating to the user equipment conditions under which to connect to one of the first radio access network and a second radio access network.

In one embodiment, the traffic steering parameters comprise at least one of an indication of a radio condition threshold, signal strength threshold, interference strength threshold, a cell condition threshold and loading threshold at which to connect to one of the first radio access network and a second radio access network.

In one embodiment, the load balancing parameters comprise network identification parameters identifying at least one network node of the second radio access network to which the user equipment is connectable.

In one embodiment, the network identification parameters identify a connection preference for each network node of the second radio access network.

In one embodiment, the message comprises load balancing parameters for each network node of the second radio access network.

In one embodiment, the message comprises common load balancing parameters for every public land mobile network together with replacement load balancing parameters for each public land mobile network.

In one embodiment, the message comprises one of a broadcast message to all user equipment supported by the base station and a unicast message to a specified user equipment supported by the base station.

According to a fourth aspect, there is provided a wireless telecommunications user equipment method comprising: receiving a message including load balancing parameters for each public land mobile network supported by a base station of a first radio access network and a network node of a second radio access network; and controlling connection to one of the first radio access network and the second radio access network based on the load balancing parameters for that public land mobile network with which the user equipment is associated and condition information indicative of operating conditions being experienced by at least one of the user equipment, logic of the base station and the network node.

In one embodiment, the first radio access network comprises a wireless telecommunications network and the second radio access network comprises a wireless local area network.

In one embodiment, each public land mobile network is provided for a different network operator.

In one embodiment, the method comprises receiving updated load balancing parameters for each public land mobile network and controlling connection to one of the first radio access network and the second radio access network based on the updated load balancing parameters.

In one embodiment, the condition information comprises at least one of an indication of a radio condition, signal strength, interference strength, a cell condition and loading.

In one embodiment, the method comprises transmitting the condition information to the base station.

In one embodiment, the load balancing parameters comprise traffic steering parameters indicating to the user equipment conditions under which to connect to one of the first radio access network and a second radio access network.

In one embodiment, the traffic steering parameters comprise at least one of an indication of a radio condition threshold, signal strength threshold, interference strength threshold, a cell condition threshold and loading threshold at which to connect to one of the first radio access network and a second radio access network.

In one embodiment, the load balancing parameters comprise network identification parameters identifying at least one network node of the second radio access network to which the user equipment is connectable.

In one embodiment, the network identification parameters identify a connection preference for each network node of the second radio access network.

In one embodiment, the message comprises load balancing parameters for each network node of the second radio access network.

In one embodiment, the message comprises common load balancing parameters for every public land mobile network together with replacement load balancing parameters for each public land mobile network.

In one embodiment, the message comprises one of a broadcast message to all user equipment supported by the base station and a unicast message to a specified user equipment supported by the base station.

According to a fifth aspect, there is provided a computer program product operable, when executed on a computer, to perform the method steps of the second or the fourth aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

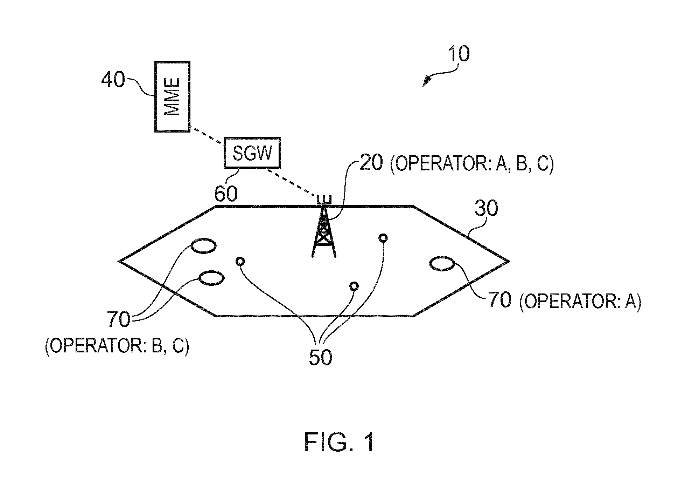

Figure 1 illustrates the main components of a telecommunications network according to one embodiment.

### DESCRIPTION OF THE EMBODIMENTS

### Overview

Before discussing the embodiments in any more detail, first an overview will be provided. Embodiments provide a technique which enables load balancing or traffic steering to be performed in a shared environment where more than one operator uses the same network nodes and each operator may wish to have its own parameters set for such load-balancing or traffic steering. For example, the load balancing may occur between a conventional cellular wireless telecommunications network and a wireless local area network by taking into consideration radio condition, network condition and network node related parameters such as load and signal strength. This then facilitates complete or partial offloading of traffic between the base station and wireless local area network (in either direction). In particular, parameters or thresholds are set to control traffic steering or load-balancing for each network operator. This enables different traffic steering or load-balancing parameters to be set for different network operators using the same network nodes.

This is achieved by generating a message which may be transmitted to the user equipment within the coverage area of a base station which includes the parameters or thresholds for load-balancing or traffic steering for each network operator. User equipment may then determine the load-balancing or traffic steering parameters specified for its operator from this message to enable the user equipment to determine which of the cellular wireless telecommunications network and the wireless local area network it should be connected to for the current operating conditions.

In this way, in a shared radio access network (RAN) environment where more than one operator uses the same RAN node, each operator may have its own set of RAN parameters to meet its needs. For example, using Reference Signal Received Power (RSRP)/ Common Pilot Channel (CPICH) received signal code power (RSCP) thresholds for traffic steering, one operator may only move user equipment located at the cell edge to a WLAN when the cellular network is not congested. However, another operator may want all users within a cell to move to a WLAN even when the cellular network is not congested, as long as the WLAN is also not congested. In this example, the thresholds used for load-balancing and traffic steering for the two operators will be different. Also, the list of WLAN identifiers may be different. This is because different operators may have different sets of WLANs available as they may have roaming agreements and partnerships with different WLAN operators. Even if different operators have the same set of WLAN identifiers, the order of those WLAN identifiers may not be the same, as each WLAN may have a different priority for each operator depending on the agreement and partnership.

### Network Overview

Figure 1 illustrates a wireless telecommunications system 10 according to one embodiment. User equipment 50 roam through the wireless telecommunications system 10. Base stations 20 are provided which support areas of radio coverage 30. A number of such base stations 20 are provided and are distributed geographically in order to provide a wide area of coverage to user equipment 50. When user equipment 50 is within an area served by a base station 20, communications may be established between the user equipment 50 and the base station 20 over associated radio links. Each base station 20 typically supports a number of sectors within the geographical area of service 30.

Typically, a different antenna within a base station 20 supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment 50 and base stations 20 that may be present in a typical communications system 10.

The wireless communications system is managed by Mobility Management Entity (MME) 40. The MME 40 controls operation of the wireless communications system by communicating with a plurality of base stations 20 via Serving Gateways (SGW) 60. The MME 40 also communicates with user equipment 50 via each base station 20 and thus effectively manages the wireless communications system.

MME 40 maintains location information which provides information on the location of user equipment 50 within the wireless communication system 10. The MME 40 is operable to signal to SGW 60 to route data traffic through the telecommunications network, from a core network to user equipment 50 and vice versa.

User equipment 50 typically transmits information and data to a base station 20 so that it can be re-routed within a wireless telecommunications network. User equipment 50 may, for example, need to transmit data to the base station 20 in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

In addition, a number of WLAN 70 are provided by an associated access point (not shown), which typically have their own internet backhaul to a WLAN provider. As mentioned above, agreements may exist to enable user equipment 50 to be steered onto these WLAN 70 to take traffic to and from the user equipment 50.

In this example, the base station 20 supports three PLMNs, one for each operator A, B, C (it will be appreciated that the base station may support more or fewer than this). Also, each WLAN 70 supports an operator. In this example, one WLAN 70 supports operator A, whilst two WLAN support operators B and C (again, it will be appreciated that more or fewer WLAN 70 may be provided who may also support more or fewer operators).

### Parameter Determination

Embodiments enable the RAN parameters associated with WLAN network selection and cellular telecommunications network-WLAN traffic steering to be provided per network operator (or public land mobile network (PLMN)) over the radio access network using user equipment specific or broadcast signalling. The RAN parameters associated with WLAN selection and cellular telecommunications network-WLAN traffic steering are typically thresholds related to cellular wireless network/ Wi-Fi RAN and backhaul load and signal strength, as well as a list of WLAN identifiers. With this, it allows each operator sharing the same RAN node to define their own WLAN selection and traffic steering rules and prioritized list of WLAN identifiers. This allows each operator sharing the same RAN node to define their own WLAN selection and traffic steering rules and prioritized list of WLAN identifiers. Table 1 indicates example RAN parameters for traffic steering and WLAN selection.

**Table 1**

| Parameter | Description |
|---|---|
| Load Information | Direct/indirect indication of UMTS/LTE load, e.g. in percentage, in load levels (low, medium, high) or offload preference indicator |
| Resource Allocation | Maximum resource allocation the UE may receive on UMTS/LTE |
| WLAN Thresholds | WLAN RSSI threshold, WLAN BSS load threshold and WLAN WAN metric threshold |
| RAN Thresholds | RSRP/ RSCP thresholds |

Abase station within the cellular wireless telecommunications network either receives the RAN parameters associated with WLAN network selection and traffic steering from the network operator or derives these from information provided by the network operator and the conditions being experienced by the user equipment, WLAN, or base station of the cellular wireless telecommunications network. The RAN node then broadcasts the RAN parameters for each PLMN in either a broadcast or user equipment specific signalling. The user equipment specific signalling is used if the RAN node does not have knowledge of the PLMN the user equipment has registered or selected to be associated with. The broadcast signalling is used in a non-user equipment specific manner.

One example of the signalling in the form of a message is shown below.

```
 3gppWlanParameter-PerPLMN-List SEQUENCE (SIZE (1..6)) OF 3gppWlanParameterPLMN
 3gppWlanParameterPLMN ::- SEQUENCE {
     threshold1 Value1
     threshold2 Value2
     threshold3 Value3
     thresholdN ValueN
     wlanId-PLMN SEQUENCE (SIZE (1..M)) OF WlanId
 }
 WlanId::= SEQUENCE {
     WlanIdType CHOICE {
             SSID BIT STRING (SIZE(I))
             BSSID BIT STRING (SIZE(J))
             HESSID BIT STRING (SIZE(K))
             REALM BIT STRING (SIZE(L))
     }
 }
```

In this example, threshold1 to thresholdN specify steering thresholds, whilst the WLAN ID type specifies the WLAN identifiers. In other words, a number of thresholds are specified which are utilized by the user equipment and compared against current conditions being experienced by the user equipment. When the specified thresholds are achieved, then the WLAN identified by the WLAN identifiers may be used for traffic offloading. A number of WLAN identifiers may be included for each different WLAN onto which traffic may be offloaded. The ordering of the different WLAN within the list can be used to indicate a priority associated with each WLAN, or a priority indicator may be provided for each entry. The steering thresholds and Wi-Fi information is then repeated within the message for each PLMN. Each of the thresholds can be associated with the threshold of RSRP, CPICH RSCP, 3GPP RAN load, Wi-Fi BSS load and WLAN metrics.

In another example, some of the thresholds can be provided per WLAN ID. This allows the operator to set the WLAN selection threshold per WLAN and an example message is shown below.

```
 3gppWlanParameter-PerPLMN-List SEQUENCE (SIZE (1..6)) OF 3gppWlanParameterPLMN
 3gppWlanParameterPLMN ::- SEQUENCE {
     threshold1 Value1
     threshold2 Value2
     thresholdN ValueN
     wlanId-PLMN SEQUENCE (SIZE (1..M)) OF WlanId
 }
 WlanId::= SEQUENCE {
     WlanIdType CHOICE {
             SSID BIT STRING (SIZE(I))
             BSSID BIT STRING (SIZE(J))
             HESSID BIT STRING (SIZE(K))
             REALM BIT STRING (SIZE(L))
     threshold3 Value3
     }
 }
```

Threshold3 can be the Wi-Fi BSS load or the WLAN metrics.

In another arrangement, a bitmap can indicate whether a particular threshold is related to a particular PLMN, as shown below.

```
 3gppWlanParameterPLMN ::- SEQUENCE {
     threshold1 Value1
     threshold2 Value2
     Threshold6 Value6
 }
 3gppWlanParametrsPLMNbitmap::= SEQUENCE (SIZE (1..6)) of 3gppWlanperPLMN
 3gppWlanperPLMN::= SEQUENCE {
 3gppWlanperPLMN BIT STRING (SIZE (6)) - indication of which
                                                    - 3gppWlanParameterPLMN are used
 }
```

In another arrangement, a particular PLMN does not define thresholds for traffic steering or WLAN network selection identifiers, in which case for that particular PLMN the user equipment will not perform any traffic steering to the WLAN.

In another arrangement, a common set of parameters for all PLMNs is provided. A primary PLMN provides the common set of parameters for all PLMNs sharing the network, and where a PLMN differs from the primary PLMN, this will be explicitly signalled within the message. Such an arrangement is shown below.

```
 3gppWlanParameter-Common 3gppWlanParameterPLMN
 3gppWlanParameter-PerPLMNspecific-List SEQUENCE (SIZE (1..5)) OF 3gppWlanPLMNspecific
 3gppWlanPLMNspecific ::- SEQUENCE {
     plmnid PLMNIdentity
     3gppWlanParameter 3gppWlanParameterPLMN
 }
 3gppWlanParameterPLMN ::- SEQUENCE {
     threshold1 Value1
     threshold2 Value2
     threshold3 Value3
     thresholdN ValueN
     wlanId-PLMN SEQUENCE (SIZE (1..M)) OF WlanId
 }
 WlanId::= SEQUENCE {
     WlanIdType CHOICE {
             SSID BIT STRING (SIZE(I))
             BSSID BIT STRING (SIZE(J))
             HESSID BIT STRING (SIZE(K))
             REALM BIT STRING (SIZE(L))
     }
 }
```

Accordingly, it can be seen that this arrangement enables each operator sharing a RAN node to set their own WLAN selection and traffic steering rules, together with a prioritized list of WLAN identifiers. This enables individual operator traffic steering parameters to be set in a shared environment.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications base station of a first radio access network operable to support a plurality of public land mobile networks, said base station comprising:
reception logic operable to receive condition information indicative of operating conditions being experienced by at least one of user equipment connected to said base station, logic of said base station of said first radio access network and a network node of a second radio access network operable to support at least one public land mobile network;
determining logic operable to determine load balancing parameters for each public land mobile network supported by that base station for transmission to user equipment to control user equipment connection to one of said first radio access network and a second radio access network, said load balancing parameters being determined based on said condition information; and
transmission logic operable to transmit a message including said load balancing parameters for each public land mobile network to user equipment within a cell provided by said base station.

2. The base station of claim 1, wherein said first radio access network comprises a wireless telecommunications network and said second radio access network comprises a wireless local area network.

3. The base station of claim 1 or 2, wherein said reception logic is operable to receive updated condition information indicative of current operating conditions and said determining logic operable to determine updated load balancing parameters for each public land mobile network based on said updated condition information.

4. The base station of any preceding claim, wherein said condition information comprises at least one of an indication of a radio condition, signal strength, interference strength, a cell condition and loading.

5. The base station of any preceding claim, wherein said reception logic is operable to receive said condition information from at least one of user equipment connected to said base station, said logic of said base station of said first radio access network and said network node of said second radio access network.

6. The base station of any preceding claim, wherein said load balancing parameters comprise traffic steering parameters indicating to said user equipment conditions under which to connect to one of said first radio access network and a second radio access network.

7. The base station of claim 6, wherein said traffic steering parameters comprise at least one of an indication of a radio condition threshold, signal strength threshold, interference strength threshold, a cell condition threshold and loading threshold at which to connect to one of said first radio access network and a second radio access network.

8. The base station of any preceding claim, wherein said load balancing parameters comprise network identification parameters identifying at least one network node of said second radio access network to which said user equipment is connectable.

9. The base station of claim 8, wherein said network identification parameters identify a connection preference for each network node of said second radio access network.

10. The base station of any preceding claim, wherein said message comprises load balancing parameters for each network node of said second radio access network.

11. The base station of any preceding claim, wherein said transmission logic is operable to transmit said message as one of a broadcast message to all user equipment supported by said base station and a unicast message to a specified user equipment supported by said base station.

12. A wireless telecommunications base station method, said base station being of a first radio access network and operable to support a plurality of public land mobile networks, said method comprising:
receiving condition information indicative of operating conditions being experienced by at least one of user equipment connected to said base station, logic of said base station of said first radio access network and a network node of a second radio access network operable to support at least one public land mobile network;
determining load balancing parameters for each public land mobile network supported by that base station for transmission to user equipment to control user equipment connection to one of said first radio access network and a second radio access network, said load balancing parameters being determined based on said condition information; and
transmitting a message including said load balancing parameters for each public land mobile network to user equipment within a cell provided by said base station.

13. A wireless telecommunications user equipment comprising:
reception logic operable to receive a message including load balancing parameters for each public land mobile network supported by a base station of a first radio access network and a network node of a second radio access network; and
control logic operable to control connection to one of said first radio access network and said second radio access network based on said load balancing parameters for that public land mobile network with which said user equipment is associated and condition information indicative of operating conditions being experienced by at least one of said user equipment, logic of said base station and said network node.

14. A wireless telecommunications user equipment method comprising:
receiving a message including load balancing parameters for each public land mobile network supported by a base station of a first radio access network and a network node of a second radio access network; and
controlling connection to one of said first radio access network and said second radio access network based on said load balancing parameters for that public land mobile network with which said user equipment is associated and condition information indicative of operating conditions being experienced by at least one of said user equipment, logic of said base station and said network node.

15. A computer program product operable, when executed on a computer, to perform the method steps of any one of claims 12 or 14.
